# EUROPÄISCHE PATENTANMELDUNG

(11) **EP 3 141 332 A1**
(43) Veröffentlichungstag der Anmeldung: **15.03.2017**
(21) Anmeldenummer: 16184494.9
(22) Anmeldetag: 17.08.2016
(51) Int. Cl.: B23K 37/00, B23K 37/04, B23K 37/047, B23K 26/06, B23K 26/08, B23K 26/24, B23Q 11/08, B23Q 39/04, B23K 26/70

(54) **VORRICHTUNG UND VERFAHREN ZUR BEARBEITUNG VON WERKSTÜCKEN MIT MEHREREN LASERANLAGEN**

(30) Priorität: 14.09.2015 DE 102015115463
(71) Anmelder: Wilco Wilken Lasertechnik GmbH, 59329 Wadersloh-Diestedde (DE)
(72) Erfinder: WILKEN, Tobias, 59558 Lippstadt (DE)
(74) Vertreter: Dantz, Jan Henning

(57) **Zusammenfassung**

Eine Vorrichtung zur Bearbeitung von Werkstücken (6) umfasst mehrere Laseranlagen (11, 12, 13, 14, 15), die jeweils einen Laser zur Bearbeitung eines Werkstückes (6) aufweisen und um einen drehbar gelagerten Rotationstisch (2) angeordnet sind, wobei an dem Rotationstisch (2) am äußeren Umfang mehrere Werkstückhalter (5) vorgesehen sind und durch Drehen des Rotationstisches (2) die Werkstücke (6) an dem Werkstückhalter (5) den einzelnen Laseranlagen (11, 12, 13, 14, 15) zurführbar sind, wobei die Werkstücke (6) an den Werkstückhaltern (5) einem geschlossenen Bearbeitungsraum zuführbar sind, in dem die Laseranlagen (11, 12, 13, 14, 15) angeordnet sind. Ferner betrifft die Erfindung ein Verfahren zur Bearbeitung von Werkstücken (6).

## Beschreibung

Die vorliegende Erfindung betrifft eine Vorrichtung zur Bearbeitung von Werkstücken mit mehreren Laseranlagen sowie ein Verfahren zur Bearbeitung von Werkstücken.

Die DE 10 2010 042 777 B4 offenbart eine Laserschneidanordnung, bei der eine Laserschneideinrichtung von einer für Laserstrahlen undurchlässigen Kabine umschlossen ist und an der Kabine eine Schleuse zum Einschleusen zu bearbeitender Teile vorgesehen ist. Innerhalb der Schleuse ist eine zweite Laserschneideinrichtung vorgesehen, um eine effiziente Bearbeitung der Werkstücke zu ermöglichen. Gerade für komplexere Bearbeitungsschritte ist allerdings die Vorsehung von zwei Laserschneideinrichtungen nicht ausreichend, und zudem ist das Handling der Werkstücke über mehrere Roboter vergleichsweise aufwändig.

In der EP 2 459 342 B1 ist eine maschinelle Laserbearbeitungsanlage offenbart, bei der ein Arbeitsbereich einer Laserschneidmaschine von einer Einhausung umgeben ist. Um die Werkstücke zu fördern, ist eine bewegliche Paletten-Auflage vorgesehen, was den Platzbedarf der Anlage reduzieren soll. Eine effiziente Bearbeitung von Werkstücken ist mit einer solchen Laseranlage allerdings nur begrenzt möglich.

Es ist daher Aufgabe der vorliegenden Erfindung, eine Vorrichtung und ein Verfahren zur Bearbeitung von Werkstücken zu schaffen, die eine effiziente Bearbeitung der Werkstücke ermöglichen und flexibel an unterschiedliche Bearbeitungsverfahren anpassbar sind.

Diese Aufgabe wird mit einer Vorrichtung mit den Merkmalen des Anspruches 1 und einem Verfahren mit den Merkmalen des Anspruches 12 gelöst.

Die erfindungsgemäße Vorrichtung umfasst mehrere Laseranlagen, die jeweils mit einem Laser zur Bearbeitung eines Werkstückes ausgerüstet sind, so dass ein Werkstück in mehreren Bearbeitungsschritten durch die einzelnen Laseranlagen bearbeitet werden kann. Die Laseranlagen sind dabei um einen drehbar gelagerten Rotationstisch angeordnet, wobei an dem Rotationstisch am äußeren Umfang mehrere Werkstückhalter vorgesehen sind und durch Drehen des Rotationstisches die Werkstücke an den Werkstückhaltern den einzelnen Laseranlagen zuführbar sind. Dadurch kann eine Bearbeitung der Werkstücke besonders effizient durch die einzelnen Laseranlagen erfolgen. Die Werkstücke an den Werkstückhaltern sind dabei einem geschlossenen Bearbeitungsraum zuführbar, in dem die Laseranlagen angeordnet sind. Der Bearbeitungsraum ist innerhalb einer Kabine angeordnet, die ein Strahlenschutzgehäuse ausbildet, um den Austritt von Laserstrahlen zu vermeiden. Die erfindungsgemäße Vorrichtung lässt sich dadurch besonders gut in einer Fertigungslinie einsetzen, bei der hintereinander komplexere Bearbeitungsschritte an den Werkstücken vorgenommen werden.

Vorzugsweise ist zwischen zwei benachbarten Werkstückhaltern mindestens eine Abtrennung vorgesehen, die zumindest teilweise eine Begrenzung des Bearbeitungsraumes ausbildet. Der Rotationstisch kann dann durch Drehen das Fördern der Werkstücke zu den einzelnen Laseranlagen übernehmen, wobei für die Bearbeitung mindestens eine Abtrennung ein Verschließen des Bearbeitungsraumes bewirkt. Dabei kann die Abtrennung zusammen mit dem Rotationstisch drehbar sein. Alternativ ist es möglich, dass die Abtrennung nach jedem Fördervorgang zwischen zwei Werkstückhalter bewegt wird, um den Bearbeitungsraum nach außen hin abzuschließen. Die Anbringung der Abtrennung an dem Rotationstisch hat allerdings den Vorteil, dass die Abtrennung zusammen mit dem Rotationtisch bewegt wird und kein zusätzlicher Antrieb vorgesehen werden muss.

In einer weiteren Ausgestaltung weist der Bearbeitungsraum mindestens eine Trennwand auf, wobei die Abtrennung zusammen mit der Trennwand in einer Bearbeitungsposition eine Abschirmung für den Bearbeitungsraum ausbildet. Die Trennwand kann dabei während der Drehung des Rotationstisches stationär angeordnet sein, so dass durch Drehen des Rotationstisches die Werkstücke den Laseranlagen zugeführt werden, aber bei Positionierung der Werkstücke in einer Bearbeitungsposition gleichzeitig die Abtrennung mit der stationären Trennwand eine Abschirmung ausbildet. Dadurch kann eine besonders effiziente Förderung und Bearbeitung erfolgen. Die Trennwand muss dabei nicht generell feststehend ausgebildet sein, kann allerdings während des Fördervorgangs des Rotationstisches feststehend sein. Für ein Auswechseln des Rotationstisches oder für andere Zwecke kann dann auch die Trennwand bewegbar oder auswechselbar ausgebildet sein. In der Trennwand kann dabei eine Aussparung vorgesehen sein, in die die Abtrennung einfügbar ist.

Vorzugsweise ist der Rotationstisch auf einem Drehkranz über Axiallager oder Radial-Axiallager drehbar gelagert, um eine präzise Bewegung der Werkstückhalter zu gewährleisten. Der Rotationtisch mit den Werkstückhaltern kann dabei auswechselbar auf dem Drehkranz angeordnet sein, so dass bei einer Bearbeitung anderer Werkstücke der gesamte Drehkranz ausgewechselt wird, was die Rüstzeiten verringert. Dadurch kann die Vorrichtung schnell an die Bearbeitung unterschiedlicher Werkstücke angepasst werden.

In einer bevorzugten Ausgestaltung sind die Laseranlagen in dem Bearbeitungsraum unter einem verschiebbaren, zusammenfaltbaren oder aufwickelbaren Dach angeordnet, oder einem Dach, das auf andere Weise leicht zu entfernen ist, um den Rotationstisch zum Auswechseln nach oben anzuheben. Dadurch können für die Vorrichtung mehrere Rotationstische bereitgehalten werden, die je nach Art des Werkstückes auf den Drehkranz aufgesetzt werden. Das Auswechseln eines Rotationstisches erfolgt dann vorzugsweise über einen Kran, insbesondere einen Portalkran, der den Rotationstisch nach der Entfernung des Daches anhebt und zu einer Lagerstelle bringt. Ein anderer Rotationstisch kann dann von oben auf den Drehkranz aufgesetzt werden, bevor das Dach wieder verschlossen wird.

Ferner ist es möglich, mindestens eine Laseranlage verschiebbar auszubilden. Dann kann bei einer Beschädigung der Laseranlage diese auf einfache Weise verfahren werden, insbesondere gegenüber dem Rotationstisch radial nach außen verfahren werden, um Wartungsarbeiten vorzunehmen. Der Bearbeitungsraum kann im Bereich der herausgenommenen Laseranlage über entsprechende Trennwände wieder verschlossen werden. Dafür kann mindestens eine Trennwand verfahrbar ausgebildet sein, wobei auch eine stationäre Anordnung der Trennwände möglich ist.

Bei dem erfindungsgemäßen Verfahren wird ein zu bearbeitendes Werkstück an einen Werkstückhalter an einem Rotationstisch übergeben, und dann wird durch Drehen des Rotationstisches das Werkstück zu einer ersten Laseranlage zugeführt und dort über einen Laser bearbeitet. Anschließend wird der Rotationstisch gedreht und das Werkstück einer zweiten Laseranlage zugeführt, wo es durch die zweite Laseranlage bearbeitet wird. Optional kann dann der Rotationstisch noch ein- oder mehrmals gedreht werden, um das Werkstück einer oder mehreren weiteren Laseranlagen zu einer weiteren Bearbeitung zuzuführen. Nach der erfolgten Bearbeitung wird dann das Werkstück von dem Werkstückhalter an dem Rotationstisch entfernt. Dadurch kann die Bearbeitung des Werkstückes auf eine Vielzahl von Laseranlagen aufgeteilt werden, was eine optimierte Bearbeitung in einer Fertigungslinie ermöglicht. Die Geschwindigkeit der Bearbeitung kann dann an die Taktzeit der zugeführten Werkstücke angepasst werden. Zudem werden gleichzeig mehrere Werkstücke an den einzelnen Laseranlagen bearbeitet.

Vorzugsweise sind die Werkstücke als Pressteile ausgebildet, insbesondere aus Metall. Dadurch kann die Taktzeit bei dem erfindungsgemäßen Verfahren an die Taktzeit einer vorgeschalteten Presse angepasst werden, so dass keine Stillstandszeiten entstehen.

Die Werkstücke werden vorzugsweise außerhalb eines Bearbeitungsraumes an den Werkstückhalter übergeben und dann innerhalb des Bearbeitungsraumes an den Laseranlagen bearbeitet. Nach der Bearbeitung werden die Werkstücke dann an der letzten Laseranlage aus dem Bearbeitungsraum durch Drehen des Rotationstisches herausbewegt und können dann von dem Werkstückhalter entnommen werden.

Die Erfindung wird nachfolgend anhand eines Ausführungsbeispiels mit Bezug auf die beigefügten Zeichnungen näher erläutert. Es zeigen:

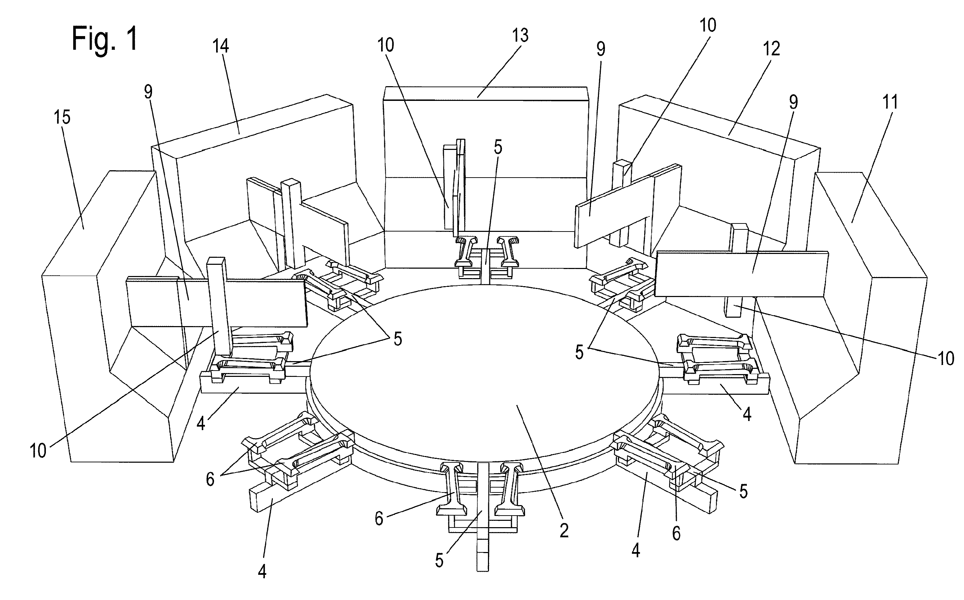

- Figur 1: eine schematische Ansicht einer erfindungsgemäßen Vorrichtung zur Bearbeitung von Werkstücken;
- Figur 2: eine Ansicht der Vorrichtung der Figur 1 mit teilweise montierter Kabinenwand;
- Figur 3: eine Ansicht der Werkstücke in den einzelnen Bearbeitungsstationen;
- Figur 4: eine Ansicht der Vorrichtung der Figur 1 mit einer geschlossenen Kabine;
- Figur 5: eine Ansicht der Vorrichtung der Figur 4 mit geöffnetem Dach;
- Figur 6: eine Ansicht der Vorrichtung der Figur 5 beim Auswechseln eines Rotationstisches, und
- Figur 7: eine Ansicht der Vorrichtung der Figur 6 bei der Montage eines Rotationstisches.

Eine Vorrichtung 1 zur Bearbeitung von Werkstücken 6 umfasst mehrere Laseranlagen 11, 12, 13, 14 und 15, die um einen Rotationstisch 2 angeordnet sind. Der Rotationstisch 2 ist drehbar um einen Drehkranz 3 gelagert, beispielsweise über entsprechende Axiallager oder Radial-Axiallager. An dem Drehkranz sind radial nach außen gerichtete Füße 4 vorgesehen, die den Drehkranz abstützen. Die Füße 4 können auch unterhalb des Drehkranzes 3 oder innerhalb des Drehkranzes 3 angeordnet werden.

An dem Rotationstisch 2 sind mehrere Werkstückhalter 5 festgelegt, die zusammen mit dem Rotationstisch 2 drehbar sind. Der Begriff "Rotationstisch" soll im Rahmen der vorliegenden Anmeldung nur ein drehbares Element bezeichnet, an dem die Werkstückhalter 5 fixiert sind. Eine "Tischplatte" ist grundsätzlich nicht erforderlich, kann aber vorgesehen werden. Ein Rotationstisch 2 im Sinne der Anmeldung kann daher auch ein drehbar gelagertes Gestell sein.

An jedem Werkstückhalter 5 ist mindestens ein Werkstück 6 gehalten, wobei in dem dargestellten Ausführungsbeispiel jeweils zwei Werkstücke 6 an einem Werkstückhalter 5 gehalten werden. Es ist auch möglich, nur ein einziges Werkstück 6 oder mehr als zwei Werkstücke 6 an einem Werkstückhalter 5 zu positionieren.

Durch Drehen des Rotationstisches 2 werden die Werkstücke 6 an den Werkstückhaltern 5 den einzelnen Laseranlagen 11, 12, 13, 14 und 15 zugeführt. Jede Laseranlage 11 umfasst ein Maschinengestell mit einem horizontalen Arm 9, an dem ein vertikaler Arm 10 verfahrbar gelagert ist. An der Unterseite des Armes 10 befindet sich ein Laserkopf zur Bearbeitung eines Werkstückes 6, insbesondere zur Herstellung von Einschnitten, Markierungen, Verschweißungen oder anderen mittels Laser durchführbaren Prozesse.

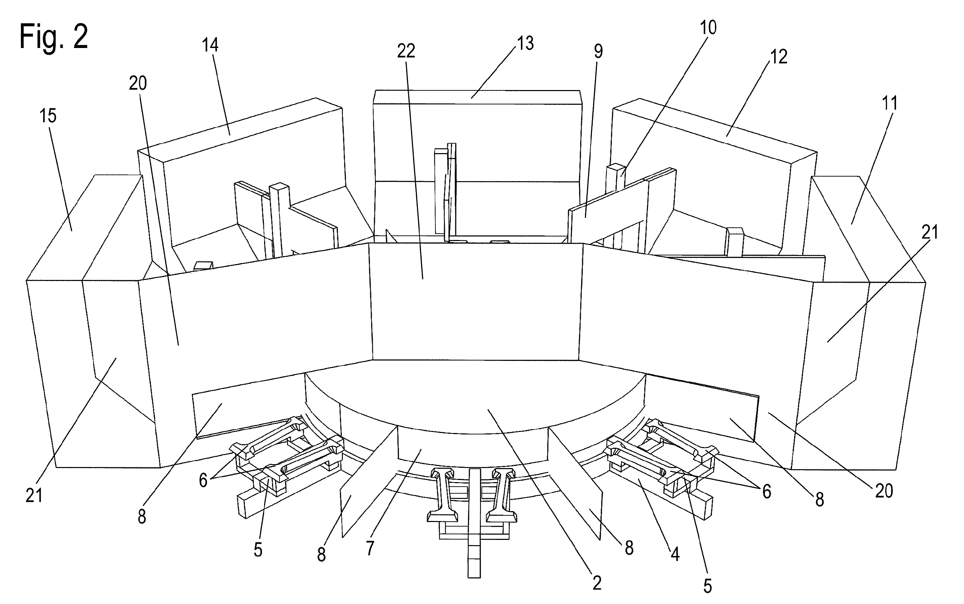

Um einen Bearbeitungsvorgang an den Werkstücken 6 ausführen zu können, sind die Werkstücke im Bereich der Laseranlagen 11, 12, 13, 14 und 15 in einem geschlossenen Bearbeitungsraum angeordnet, der teilweise in Figur 2 gezeigt ist. Der Bearbeitungsraum ist von einer Kabine umgeben, die ein Strahlenschutzgehäuse ausbildet und den Austritt von Laserstrahlen vermeidet. Die Kabine weist eine Trennwand 20 auf, die im Bereich der Werkstückhalter 5 an dem Rotationstisch 2 positioniert ist, wobei zwei dieser Trennwände 20 vorgesehen sind, die über eine Mittelwand 22 an dem Rotationstisch 2 miteinander verbunden sind. Jede Trennwand 20 weist eine Aussparung 24 auf, durch die eine Abtrennung 8 geführt ist. Die Abtrennung 8 ist an dem Rotationstisch 2 fixiert und kann zusammen mit diesem gedreht werden. In einer Bearbeitungsposition bilden die Abtrennung 8 und die Trennwand 20 eine Abschirmung für den Bearbeitungsraum aus und verschließen diesen nach außen, wobei an einem Spalt zwischen Abtrennung 8 und Trennwand 20 elastische Abschirmstreifen vorgesehen sein können.

An dem Rotationstisch 2 sind dabei mehrere Abtrennungen 8 vorgesehen, die jeweils zwischen zwei Werkstückhaltern 5 angeordnet sind. Es ist auch möglich, mehr als nur eine Abtrennung 8 zwischen zwei Werkstückhaltern 5 vorzusehen. Die Abtrennung 8 und die Trennwand 20 können durch Metallbleche oder andere ein- oder mehrlagige Wandelemente gebildet sein. Zudem können zwischen der Abtrennung 8 und der Trennwand 20 Dichtmittel vorgesehen sein, die eine Art Schleuse zum Durchführen der Abtrennung 8 durch die Trennwand 20 bilden, wenn der Rotationstisch 2 gedreht wird.

Die Kabine umfasst ferner auf der von dem Rotationstisch 2 abgewandten Seite an den Laseranlagen 11, 12, 13, 14 und 15 eine Rückwand, die in Figur 2 nicht dargestellt ist. An der Oberseite des Bearbeitungsraumes wird ein Dach 25 vorgesehen, das bei Bedarf geöffnet werden kann.

Für die Bearbeitung der Werkstücke 6 werden diese außerhalb des Bearbeitungsraumes an einen Werkstückhalter 5 übergeben, beispielsweise über einen Roboter, manuell oder über andere Fördervorrichtungen. Nach der Übergabe eines oder mehrerer Werkstücke 6 auf einen Werkstückhalter 5 wird der Rotationstisch 2 gedreht, so dass ein Werkstück 6 zu der ersten Laseranlage 11 gefördert wird. In der Bearbeitungsposition ist der Bearbeitungsraum nach außen geschlossen, wobei im Bereich des Rotationstisches 2 die Trennwände 20, die Mittelwand 22 und die Abtrennung 8 für einen Verschluss sorgen. Anschließend wird das Werkstück 6 an der ersten Laseranlage 11 bearbeitet, bevor dann der Rotationstisch 2 weitergedreht wird, um ein neues Werkstück 6 zu der ersten Laseranlage 11 zu transportieren und das bereits bearbeitete Werkstück von der ersten Laseranlage 11 zu der zweiten Laseranlage 12 zu transportieren. Dann wird der Rotationstisch 2 wieder angehalten, um einen weiteren Bearbeitungsvorgang durchzuführen. Anschließend wird das Werkstück 6 von der zweiten Laseranlage 12 zu der dritten Laseranlage 13 und den nachfolgenden Laseranlagen 14 und 15 zugeführt. In dem Bearbeitungsraum können wahlweise mindestens zwei, vorzugsweise mehr als drei, beispielsweise zwischen vier und zehn Laseranlagen vorgesehen sein. In dem Bearbeitungsraum muss zwischen den einzelnen Laseranlagen 11 und 12 keine Abtrennung vorsehen sein, da alle Laseranlagen 11, 12, 13, 14 und 15 in einem gemeinsamen Bearbeitungsraum angeordnet sind. Es ist natürlich möglich, zwischen zwei Laseranlagen 11 und 12 eine Trennwand vorzusehen, die ähnlich wie eine Seitenwand 21 und die Trennwand 20 für eine Abschirmung sorgt, allerdings dann zwischen zwei benachbarten Laseranlagen 11 und 12. Dadurch kann bei Bedarf eine einzelne Laseranlage von dem Rotationstisch entfernt werden, wobei dann immer noch ein geschlossener Bearbeitungsraum für die anderen Laseranlagen erhalten bleibt.

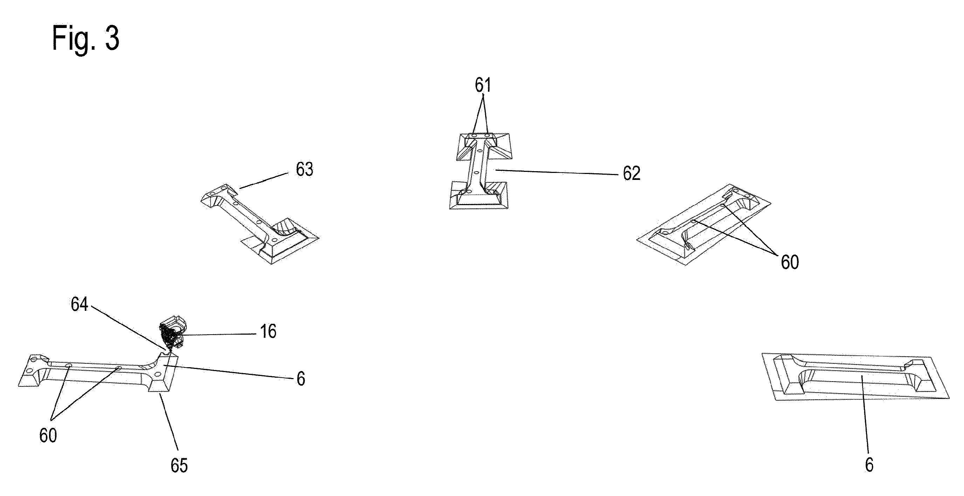

In Figur 3 ist ein Werkstück 6 dargestellt, das durch die Laseranlagen 11 bis 15 bearbeitet wird. Das Werkstück 6 ist als Press- oder Gussteil ausgebildet, insbesondere aus Metall. An der ersten Laseranlage 11 werden in einem Steg des Werkstückes 2 Bohrungen 60 eingebracht. Die zweite Laseranlage 12 dient zum Ausschneiden einer Aussparung 62 und zum Einbringen weiterer Öffnungen 61. An der dritten Laseranlage 13 wird das Werkstück 6 mit Einschnitten 63 versehen, während die Laseranlage 14 einen weiteren Einschnitt 65 vornimmt. An der Laseranlage 15 wird über einen Laserkopf 16, der in Figur 3 schematisch dargestellt ist, ein Einschnitt 64 vorgenommen. Die Art der Bearbeitung kann natürlich je nach Werkstück 6 variieren. Die Bearbeitungsschritte an den einzelnen Laseranlagen 11, 12, 13, 14, 15 werden so gestaltet, dass etwa die gleiche Zeitdauer benötigt wird, so dass der Rotationstisch 2 in einer vorbestimmten Taktzeit bewegt wird, die beispielsweise auch an den Takt einer vorgeschalteten Maschine, beispielsweise einer Presse, ausgerichtet sein kann. Dadurch kann eine besonders effiziente Herstellung und Bearbeitung der Werkstücke 6 erfolgen.

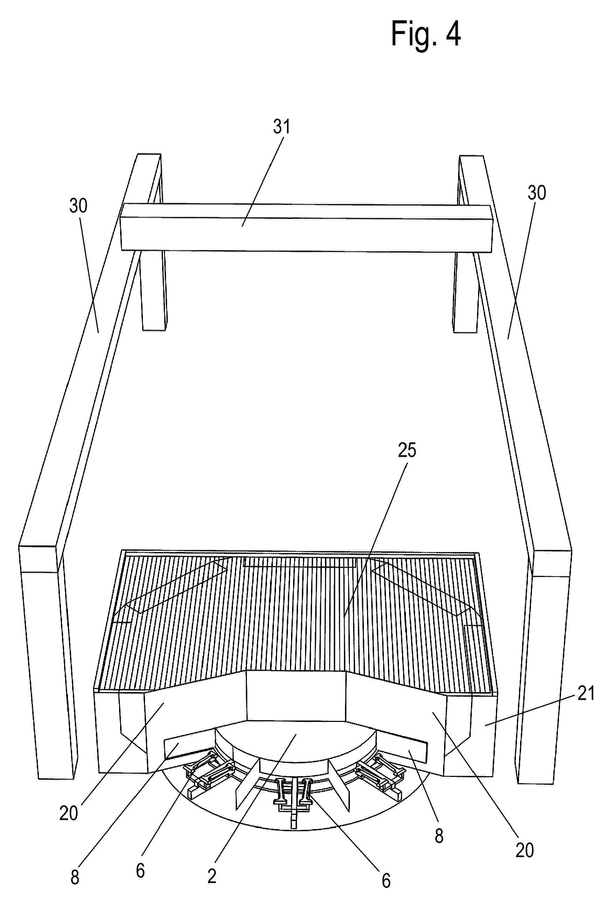

In Figur 4 ist die Vorrichtung 1 zur Bearbeitung von Werkstücken innerhalb des Bearbeitungsraumes gezeigt, der nach außen geschlossen ist. An der Oberseite ist ein Dach 25 vorgesehen, während an den Seiten die Abtrennung 8, Trennwände 20, Seitenwände 21 und weitere Wände vorgesehen sind, um den Bearbeitungsraum zu verschließen. Die Übergabe und Entnahme der Werkstücke 6 kann außerhalb des Bearbeitungsraumes erfolgen, wobei hierfür entsprechende Roboter oder andere Fördereinrichtungen vorgesehen sein können.

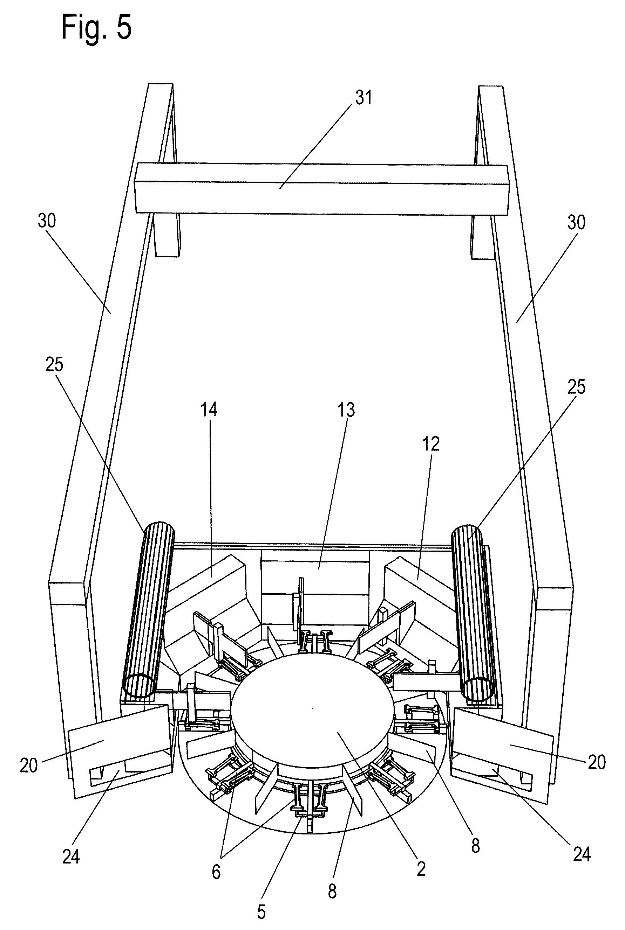

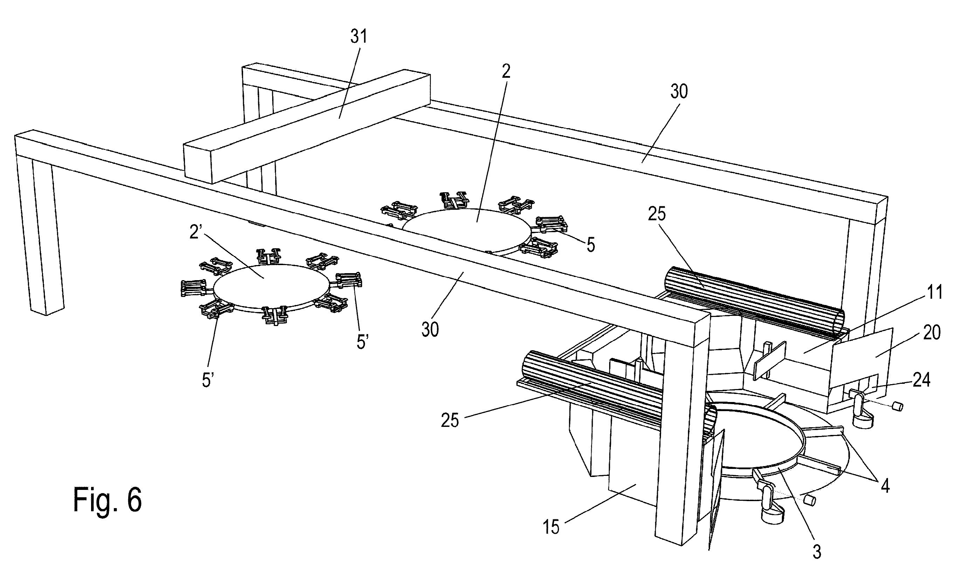

Soll mit den Laseranlagen 11 bis 15 ein anderes Werkstück bearbeitet werden, das andere Werkstückhalter 5 erfordert, kann der Rotationstisch 2 ausgewechselt werden. Hierfür wird in einem ersten Schritt das Dach 25 entfernt, beispielsweise durch ein Verschieben oder Aufwickeln des Daches 25, wie dies in Figur 5 gezeigt ist. Dadurch wird der Bearbeitungsraum nach oben hin geöffnet. Ferner werden die Trennwände 20, die den Rotationstisch 2 zumindest teilweise überdecken, radial nach außen verfahren oder demontiert, und auch die über dem Rotationstisch 2 angeordnete Mittelwand 22 wird entfernt. Der Rotationstisch 2 ist nun von oben frei zugänglich. Dadurch kann ein Kran, insbesondere ein Portalkran, der entlang von zwei Portalen 30 verfahrbar ist und über einen Querbalken 31 an den Portalen 30 abgestützt ist, über den Rotationstisch 2 verfahren. Über entsprechende Hebemittel wird der Rotationstisch 2 angehoben und von dem Drehkranz 3 entfernt, wie dies in Figur 6 gezeigt ist. Der Rotationstisch 2 kann dann in eine Lagerposition gebracht werden, um einen modifizierten Rotationstisch 2' mit modifizierten Werkstückhaltern 5' auf den Drehkranz 3 zu fördern.

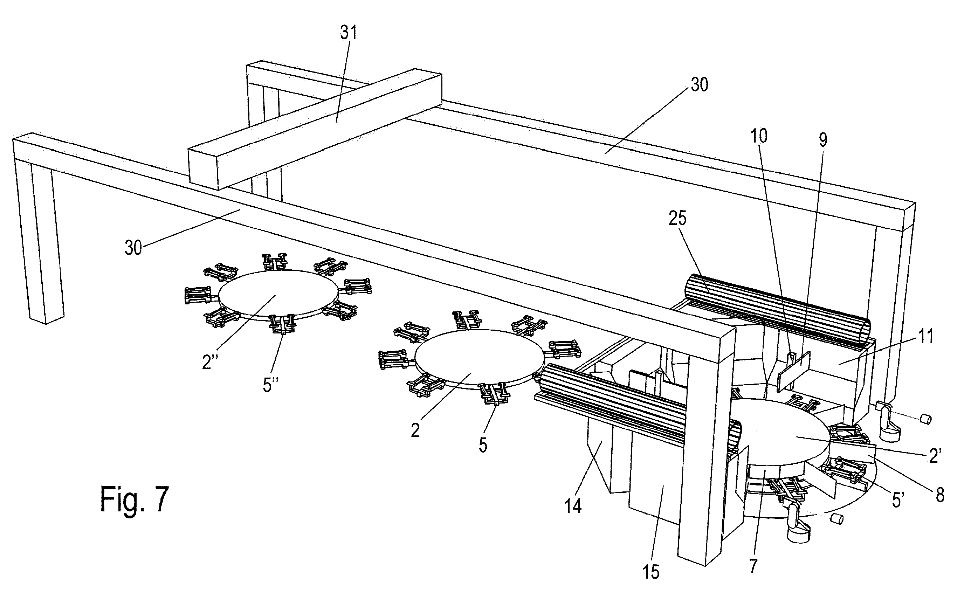

In Figur 7 ist gezeigt, dass über den Kran ein modifizierter Rotationstisch 2' auf dem Drehkranz 3 montiert wurde, der nun drehbar gelagert ist und zum Fördern von weiteren Werkstücken eingesetzt werden kann. Der Rotationstisch 2 und ein weiterer Rotationstisch 2" mit weiteren Werkstückhaltern 5" sind in einer Lagerposition angeordnet.

An dem Rotationstisch 2 sind in den dargestellten Ausführungsbeispielen nur Werkstückhalter 5, 5' oder 5" vorgesehen. Es ist auch möglich, eine Wand 7, die am Umfang des Rotationstisches 2 angeordnet ist und an der die Abtrennungen 8 festgelegt sind, fest mit dem Rotationstisch 2 zu verbinden und diese als Einheit auszuwechseln. Stattdessen ist es auch möglich, nur die Werkstückhalter 5 auszuwechseln und die Wand 7 mit den Abtrennungen 8 nach der Montage der Werkstückhalter 5 auf diese aufzusetzen, damit dann der Bearbeitungsraum wieder über die Abtrennungen 8 verschlossen werden kann.

Die Geometrie der Abtrennung 8 und der Trennwände 20 kann natürlich variiert werden, beispielsweise können die Abtrennungen 8 größer ausgebildet werden oder eine andere Form aufweisen. Zudem können die Trennwände 20 mehrteilig ausgebildet sein und über Scharniere, Führungsschienen oder andere Mittel zusammenfaltbar oder verschiebbar sein.

Die Anzahl der Laseranlagen 11 bis 15 innerhalb des Bearbeitungsraumes kann ebenfalls je nach den Anforderungen variiert werden. Vorzugsweise erstreckt sich der Bearbeitungsraum aber nicht um den gesamten Umfang des Rotationstisches, sondern es ist mindestens eine Station zum Zuführen der Werkstücke 6 und eine Station zur Entnahme der Werkstücke 6 außerhalb des Bearbeitungsraumes vorgesehen.

### Bezugszeichenliste

- 1: Vorrichtung
- 2, 2', 2": Rotationstisch
- 3: Drehkranz
- 4: Fuß
- 5, 5', 5": Werkstückhalter
- 6: Werkstück
- 7: Wand
- 8: Abtrennung
- 9: Arm
- 10: Arm
- 11: Laseranlage
- 12: Laseranlage
- 13: Laseranlage
- 14: Laseranlage
- 15: Laseranlage
- 16: Laserkopf
- 20: Trennwand
- 21: Seitenwand
- 22: Mittelwand
- 24: Aussparung
- 25: Dach
- 30: Portal
- 31: Querbalken
- 60: Bohrung
- 61: Öffnung
- 62: Aussparung
- 63: Einschnitt
- 65: Einschnitt
- 64: Einschnitt

## Patentansprüche

1. Vorrichtung zur Bearbeitung von Werkstücken (6), mit mehreren Laseranlagen (11, 12, 13, 14, 15), die jeweils einen Laser zur Bearbeitung eines Werkstückes (6) aufweisen und um einen drehbar gelagerten Rotationstisch (2) angeordnet sind, wobei an dem Rotationstisch (2) am äußeren Umfang mehrere Werkstückhalter (5) vorgesehen sind und durch Drehen des Rotationstisches (2) die Werkstücke (6) an dem Werkstückhalter (5) den einzelnen Laseranlagen (11, 12, 13, 14, 15) zurführbar sind, wobei die Werkstücke (6) an den Werkstückhaltern (5) einem geschlossenen Bearbeitungsraum zuführbar sind, in dem die Laseranlagen (11, 12, 13, 14, 15) angeordnet sind.

2. Vorrichtung nach Anspruch 1, **dadurch gekennzeichnet, dass** zwischen zwei benachbarten Werkstückhaltern (5) mindestens eine Abtrennung (8) vorgesehen ist, die zumindest teilweise eine Begrenzung des Bearbeitungsraumes ausbildet.

3. Vorrichtung nach Anspruch 2, **dadurch gekennzeichnet, dass** die Abtrennung (8) zusammen mit dem Rotationstisch (23) drehbar ist.

4. Vorrichtung nach einem der vorhergehenden Ansprüche, **dadurch gekennzeichnet, dass** der Bearbeitungsraum mindestens eine Trennwand (20) aufweist und die Abtrennung (8) mit der Trennwand (20) in einer Bearbeitungsposition eine Abschirmung für den Bearbeitungsraum ausbildet.

5. Vorrichtung nach Anspruch 4, **dadurch gekennzeichnet, dass** in der Trennwand (20) eine Aussparung (24) vorgesehen ist, in der die Abtrennung (8) einfügbar ist.

6. Vorrichtung nach einem der vorhergehenden Ansprüche, **dadurch gekennzeichnet, dass** der Rotationstisch (2) auf einem Drehkranz (3) über Axiallager oder Radial-Axiallager drehbar gelagert ist

7. Vorrichtung nach einem der vorhergehenden Ansprüche, **dadurch gekennzeichnet, dass** der Rotationstisch (2) mit den Werkstückhaltern (5) auswechselbar auf dem Drehkranz angeordnet ist.

8. Vorrichtung nach einem der vorhergehenden Ansprüche, **dadurch gekennzeichnet, dass** die Laseranlagen (11, 12, 13, 14, 15) in dem Bearbeitungsraum unter einem verschiebbaren, zusammenfaltbaren oder aufwickelbaren Dach (25) angeordnet sind.

9. Vorrichtung nach einem der vorhergehenden Ansprüche, **dadurch gekennzeichnet, dass** der Rotationstisch (2) unterhalb eines Krans, insbesondere eines Portalkrans, angeordnet ist.

10. Vorrichtung nach einem der vorhergehenden Ansprüche, **dadurch gekennzeichnet, dass** mindestens eine Laseranlage (11, 12, 13, 14, 15) verschiebbar angeordnet ist.

11. Vorrichtung nach einem der vorhergehenden Ansprüche, **dadurch gekennzeichnet, dass** mindestens eine Trennwand (20) an dem Bearbeitungsraum verfahrbar ausgebildet ist.

12. Verfahren zur Bearbeitung von Werkstücken mit den folgenden Schritten:
a) Übergabe eines zu bearbeitenden Werkstückes (6) an einen Werkstückhalter (5) an einem Rotationstisch (2);
b) Drehen des Rotationstisches (2) und Zuführen des Werkstückes (6) zu einer ersten Laseranlage (11);
c) Bearbeiten des Werkstückes (6) über einen Laser an der ersten Laseranlage (11);
d) Drehen des Rotationstisches (2) und Zuführen des Werkstückes (6) zu einer zweiten Laseranlage (12);
e) Bearbeiten des Werkstückes (6) an der zweiten Laseranlage (12);
f) optionales Wiederholen des Drehen des Rotationstisches (2) und Zuführen des Werkstückes (6) zu mindestens einer weiteren Laseranlage (13, 14, 15) mit nachfolgender Bearbeitung, und
g) Entfernen des bearbeiteten Werkstückes (6) von dem Werkstückhalter (5) an dem Rotationstisch (2).

13. Verfahren nach Anspruch 12, **dadurch gekennzeichnet, dass** die Werkstücke (6) als Pressteile, insbesondere aus Metall, ausgebildet sind.

14. Verfahren nach Anspruch 12 oder 13, **dadurch gekennzeichnet, dass** die Werkstücke (6) außerhalb eines Bearbeitungsraumes an den Werkstückhalter (5) übergeben werden und innerhalb eines Bearbeitungsraumes an den Laseranlagen (11, 12, 13, 14, 15) bearbeitet werde.

15. Verfahren nach einem der Ansprüche 12 bis 14, **dadurch gekennzeichnet, dass** die Werkstücke (6) nach der Bearbeitung an der letzten Laseranlage (15) aus einem Bearbeitungsraum durch Drehen des Rotationstisches (2) herausbewegt werden und dann von dem Werkstückhalter (5) entnommen werden.
